# EUROPEAN PATENT APPLICATION

(11) **EP 3 444 901 A1**
(43) Date of publication of application: **20.02.2019**
(21) Application number: 17782226.9
(22) Date of filing: 27.03.2017
(51) Int. Cl.: H01Q 9/26, G06K 19/077

(54) **IC TAG AND METHOD OF MANUFACTURING IC TAG**

(30) Priority: 14.04.2016 JP 2016081503
(71) Applicant: NOK Corporation, Minato-ku Tokyo 105-8585 (JP)
(72) Inventor: NAKANO, Tomoko, Fujisawa-shi Kanagawa 251-0042 (JP); YAMADA, Takeshi, Fujisawa-shi Kanagawa 251-0042 (JP); MIYAJIMA, Keiichi, Fujisawa-shi Kanagawa 251-0042 (JP)
(74) Representative: TBK
(86) International application number: PCT/JP2017/012481
(87) International publication number: WO 2017/179408

(57) **Abstract**

The present invention has been made to provide an IC tag that can reduce the size of a folded dipole antenna and facilitate antenna design. The IC tag includes an IC chip and an antenna 4 electrically connected with the IC chip. The antenna 4 has a first linear portion 42, bent portions 43 formed at both ends of the first linear portion, and second linear portions 44 extending from the bent portions 43 on both ends of the first linear portion, distal ends of the second-straight line portions 44 facing each other. Bent space portions 46 are formed at both sides of space defined by the bent portions 43 on both ends of the first linear portion 42, the first linear portion 42, and the second linear portions 44. A communication enhancer 5 that tunes a resonant frequency to a desired used frequency is provided near the distal ends of the second linear portions 44 and provided at least inside or outside of space extending from one bent space portion 46 to the other bent space portion 46.

## Description

### TECHNICAL FIELD

The present invention relates to an IC tag and a method of manufacturing an IC tag and more particularly to an IC tag and a method of manufacturing an IC tag that can reduce the size of a folded dipole antenna and facilitate antenna design.

### BACKGROUND

IC tags, which are also referred to as radio frequency identification (RFID) tags, IC cards, or RFID cards, are widely used for product identification, product management, or product forgery prevention. Information about the products is written on the IC tags, and the written information is read by a reader or a reader/writer in a wireless manner when the products are managed, sold, or used.

As an example of the IC tags, magnetic IC tags are known. A magnetic IC tag includes an IC chip and a coil antenna electrically connected with the IC chip, and the IC chip and the coil antenna are integrally sealed. In this technology, the IC chip and the coil antenna are embedded in a hard resin material such as epoxy, which is advantageous in that the wiring between the IC chip and the coil antenna will not be broken.

Small magnetic IC tags have been implemented in practical applications. However, the small magnetic IC tags can communicate within short distances. To increase the communication distances, Patent Document 1 discloses an RFID tag including an antenna (external antenna).

### PRIOR ART DOCUMENTS

### PATENT DOCUMENT

Patent Document 1: JP-A-2013-80324

### SAMMARY OF THE INVENTION

### PROBLEM TO BE SOLVED BY THE INVENTION

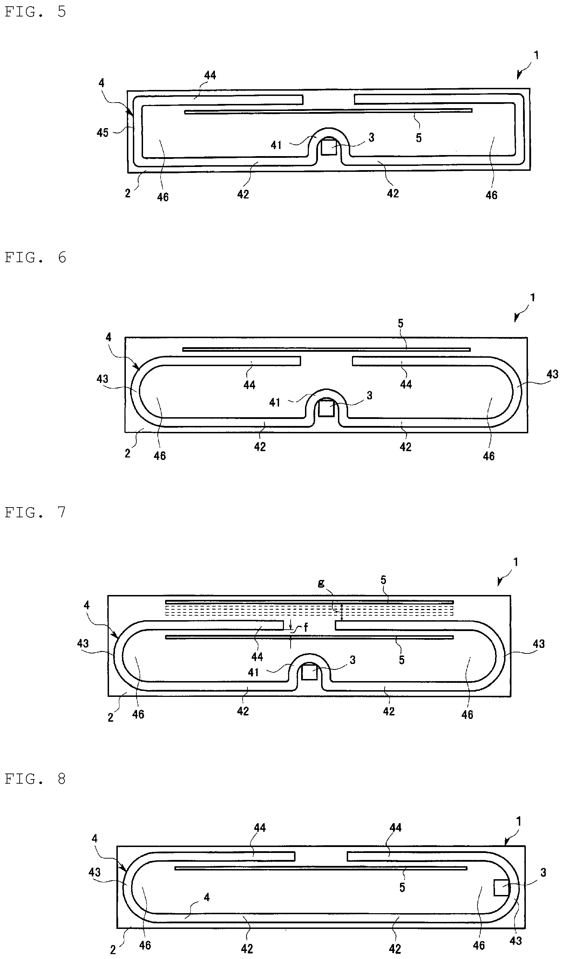

In Patent Document 1, a folded (angular u-shape) dipole antenna is illustrated in FIG. 7(3), an angular u-shape dipole antenna with more folded portions is illustrated in FIG. 7(4), and a meander line antenna is illustrated in FIG. 7(5).

A folded dipole antenna has a simple antenna design and can be used in many applications.

When an IC tag includes an antenna, for example, the IC tag for use in the ultra-high frequency (UHF) band needs an antenna having a half-wave length. The half-wave length at 920 MHz corresponds to approximately 16 cm.

When the size of a dipole antenna included in an IC tag is reduced, the resonant frequency increases. To use an IC tag in the 920 MHz band described above, a large antenna has to be included. Such a large antenna increases the size of the IC tag itself, which makes the IC tag less mountable to products.

Using a meander line antenna, which is a zigzag shaped antenna having a long antenna length, can reduce the resonant frequency and achieve a smaller sized IC tag.

However, such a zigzag structure requires more configuration parameters to be considered in antenna design. Increase in configuration parameters makes it difficult for a designer to optimize antenna design.

Additionally, the designer designs an antenna included in an IC tag on an assumption that the IC tag is attached or embedded in a resin case for use. Thus, in designing the antenna, the designer needs to consider the dielectric constant of materials in the environment in which the IC tag is used.

If the IC tag includes a meander line antenna, the designer needs to consider both the configuration parameters of the antenna and the dielectric constant of the material during use, which makes the antenna design more complicated.

The present invention has been made in view of the foregoing, and it is an object of the present invention to provide an IC tag and a method of manufacturing an IC tag that can reduce the size of a folded dipole antenna and facilitate antenna design.

Other objects of the present invention will be described below.

### MEANS FOR SOLVING PROBLEM

The problems described above will be solved by the embodiments described below.

1. An IC tag comprising:
   an IC chip; and
   an antenna electrically connected with the IC chip,
   wherein
   the antenna includes a first linear portion, bent portions formed at both ends of the first linear portion, and second linear portions extending from the bent portions on both ends of the first linear portion, distal ends of the second linear portions facing each other, and bent space portions are formed at both sides of space defined by the bent portions on both ends of the first linear portion, the first linear portion, and the second linear portions, and
   a communication enhancer that tunes a resonant frequency to a desired frequency is provided near the distal ends of the second linear portions and provided at least inside or outside of space extending from one bent space portion to the other bent space portion.
2. The IC tag according to said 1, wherein one of the bent portions has an arcuate shape or an angular c-shape, and the other one of the bent portions has an arcuate shape or an inverse angular c-shape.
3. The IC tag according to said 1 or 2, wherein the communication enhancer is linearly provided near the distal ends of the second linear portions and provided inside of the space extending from one bent space portion to the other bent space portion.
4. The IC tag according to said 1 or 2, wherein the communication enhancer is provided near the distal ends of the second linear portions and provided outside of the space extending from one bent space portion to the other bent space portion.
5. The IC tag according to said 1 or 2, wherein the communication enhancer is provided near the distal ends of the second linear portions and provided both inside and outside of the space extending from one bent space portion to the other bent space portion.
6. The IC tag according to said 1 or 2, wherein a linear communication enhancer is disposed near the distal ends of the second linear portions and disposed inside of the space extending from one bent space portion to the other bent space portion, and bent communication enhancers that are bent along the bent portions in the bent space portions are contiguously connected to both ends of the linear communication enhancer.
7. The IC tag according to any one of said 1 to 6, further comprising:
   a magnetic tag unit including the IC chip and a coil electrically connected with the IC chip, wherein
   the antenna is electrically connected with the IC chip via the coil included in the magnetic tag unit.
8. The IC tag according to said 7, wherein
   the antenna has a protruding portion near a center of the first linear portion, the protruding portion having a shape protruding toward the second linear portions, and
   the magnetic tag unit is disposed such that the magnetic tag unit is surrounded by the protruding portion.
9. The IC tag according to said 7, wherein the magnetic tag unit is disposed in one of the bent space portions inside the antenna such that the magnetic tag unit is surrounded by one of the bent portions.
10. An IC tag comprising:
   an IC tag main body including an IC chip and an antenna electrically connected with the IC chip, the antenna having a first linear portion, bent portions formed at both ends of the first linear portion, and second linear portions extending from the bent portions on both ends of the first linear portion, distal ends of the second linear portions facing each other; and
   a communication enhancing member including a communication enhancer that tunes a resonant frequency to a desired frequency, wherein
   the communication enhancing member is disposed at least on a top surface or a bottom surface of the IC tag main body via an insulating layer such that the communication enhancer is located at least at or near a position immediately above or immediately below the second linear portions.
11. The IC tag according to said 10, wherein the insulating layer is an insulating film.
12. The IC tag according to said 10 or 11, wherein one of the bent portions has an arcuate shape or an angular c-shape, and the other one of the bent portions has an arcuate shape or an inverse angular c-shape.
13. The IC tag according to said 10, 11, or 12, wherein
   a linear communication enhancer is disposed near the distal ends of the second linear portions and disposed inside of space extending from one bent space portion to another bent space portion, and bent communication enhancers that are bent along the bent portions in the bent space portions are contiguously connected to both ends of the linear communication enhancer, and
   the communication enhancing member includes the bent communication enhancers contiguously connected to the linear communication enhancer.
14. The IC tag according to any one of said 10 to 13, further comprising:
   a magnetic tag unit including the IC chip and a coil electrically connected with the IC chip, wherein
   the antenna is electrically connected with the IC chip via the coil included in the magnetic tag unit.
15. The IC tag according to said 14, wherein
   the antenna has a protruding portion near a center of the first linear portion, the protruding portion having a shape protruding toward the second linear portions, and
   the magnetic tag unit is disposed such that the magnetic tag unit is surrounded by the protruding portion.
16. The IC tag according to said 15, wherein the magnetic tag unit is disposed in one of the bent space portions inside the antenna such that the magnetic tag unit is surrounded by one of the bent portions.
17. A method of manufacturing an IC tag including an IC chip and an antenna electrically connected with the IC chip, the antenna having a first linear portion, bent portions formed at both ends of the first linear portion, and second linear portions extending from the bent portions on both ends of the first linear portion, distal ends of the second linear portions facing each other, the method comprising:
   a step of fabricating an IC tag main body in which the IC chip and the antenna are disposed on a base film;
   a step of fabricating a communication enhancing member in which a communication enhancer that tunes a resonant frequency to a desired frequency is included; and
   a step of attaching the communication enhancing member in which the communication enhancing member is attached at least to a top surface or a bottom surface of the IC tag main body via an insulating layer such that the communication enhancing member is located at least at or near a position immediately above or immediately below the second linear portions.
18. The method of manufacturing the IC tag according to said 17, wherein the insulating layer is an insulating film.

### EFFECT OF THE INVENTION

According to the present invention, an IC tag that can reduce the size of a folded dipole antenna and facilitate antenna design can be provided.

### BRIEF DESCRIPTION OF DRAWINGS

FIG. 1 is a plan view illustrating a first example of an IC tag according to a first embodiment of the present invention.
FIG. 2 is an enlarged sectional view taken along line (ii)-(ii) in FIG. 1.
FIG. 3 is a conceptual view illustrating an example of how a tag unit is connected with an antenna.
FIG. 4 is a schematic enlarged sectional view of a magnetic tag unit of the IC tag according to the first embodiment.
FIG. 5 is a plan view illustrating a second example of the IC tag according to the first embodiment.
FIG. 6 is a plan view illustrating another aspect of a third example of the IC tag according to the first embodiment.
FIG. 7 is a plan view illustrating a fourth example of the IC tag according to the first embodiment.
FIG. 8 is a plan view illustrating a fifth example of the IC tag according to the first embodiment.
FIG. 9 is a graph illustrating how a resonant frequency changes as the length of a communication enhancing conductor according to the first embodiment changes.
FIG. 10 is a plan view illustrating a sixth example of the IC tag according to the first embodiment.
FIG. 11 is a perspective view illustrating an example of a step of fabricating an IC tag main body according to a second embodiment of the present invention.
FIG. 12 is a perspective view illustrating an example of the IC tag main body according to the second embodiment.
FIG. 13 is a sectional view taken along line (xiii)-(xiii) in FIG. 12.
FIG. 14 is a perspective view illustrating an example of a step of fabricating a communication enhancing member according to the second embodiment.
FIG. 15 is a perspective view illustrating an example of the communication enhancing member according to the second embodiment.
FIG. 16 is a sectional view taken along line (xvi)-(xvi) in FIG. 15.
FIG. 17 is an exploded perspective view illustrating an example of a method of manufacturing the IC tag according to the second embodiment.
FIG. 18 is a perspective view illustrating an example of the IC tag according to the second embodiment.
FIG. 19 is a sectional view taken along line (xix)-(xix) in FIG. 18.
FIG. 20 is a diagram illustrating positional relation between an antenna and a communication enhancer in the IC tag according to the second embodiment.
FIG. 21 is a perspective view illustrating another example of the step of fabricating the communication enhancing member according to the second embodiment.

### DESCRIPTION OF THE PREFERRED EMBODIMENTS

Embodiments of the present invention will be described in detail below with reference to the accompanying drawings. It should be noted that the dimensions, materials, shapes, and relative disposition of the components described in the embodiments below are not intended to limit the scope of the present invention unless otherwise specified.

### (First Embodiment)

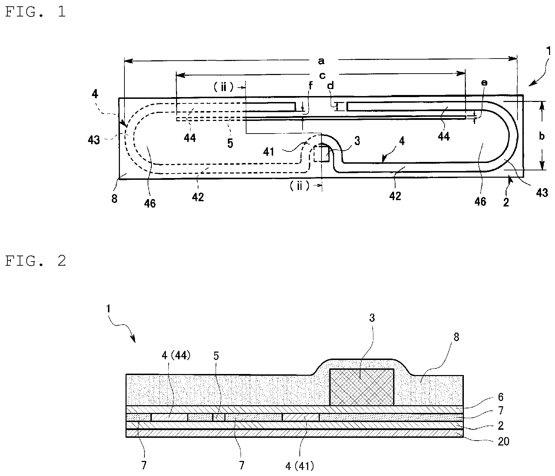

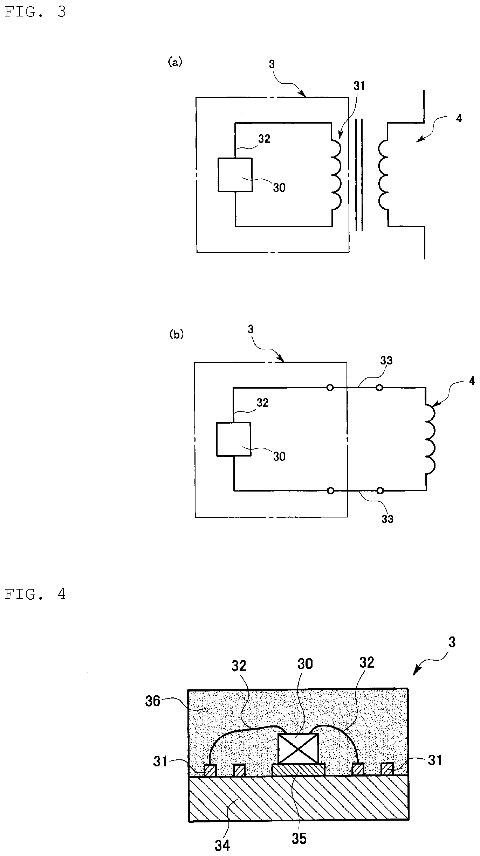

FIGS. 1 to 4 illustrate a first example. FIG. 1 is a partially cut-out plan view illustrating the first example of an IC tag according to the first embodiment. The right portion from line (ii)-(ii) in FIG. 1 illustrates a plan view of the IC tag without coating. FIG. 2 is an enlarged sectional view taken along line (ii)-(ii) in FIG. 1. FIG. 3(a) is a conceptual view illustrating an example of how a magnetic tag unit 3 is connected with an antenna 4, and FIG. 3(b) is a conceptual view illustrating an example of how a wire-based tag unit 3 is connected with the antenna 4. FIG. 4 is a schematic enlarged sectional view of the magnetic tag unit used in the first embodiment.

An IC tag 1 according to the first embodiment is configured by a flexible base film 2 made of resin, a magnetic tag unit 3 (tag unit 3), an antenna 4, a communication enhancer 5 disposed near the distal ends of the antenna, a flexible cover film 6 made of resin, and coating 8 that covers the cover film 6 and the magnetic tag unit 3.

For the flexible base film 2 made of resin, a widely available, what is called flexible printed substrate can be used.

In the IC tag 1, the antenna 4 and the communication enhancer 5 are formed on the base film 2, and the cover film 6 is fixedly attached to the surfaces thereof.

The cover film 6 can be fixedly attached to the base film 2 via, for example, an adhesive layer 7.

The base film 2 and the cover film 6 can be made of, for example, polyimide (PI), polyethylene terephthalate (PET), or polyether nitrile (PEN). If the IC tag 1 is used for bed linen or other cloth products, the IC tag 1 may be covered with a protection film 20 on the bottom surface (surface away from the cover film 6) of the base film 2. The protection film 20 is a flexible film made of resin.

For the adhesive layer 7, for example, an adhesive sheet can be used. If the base film 2 and the cover film 6 are made of a heat-resisting resin film, it is preferred to use a thermosetting adhesive.

Described next is how the tag unit 3 is connected with the antenna 4 with reference to FIGS. 3(a) and 3(b).

FIG. 3(a) illustrates an electrical connection between an IC chip 30 included in the magnetic tag unit 3, which is defined by an alternate long and short dashed line, and the antenna 4 external to the magnetic tag unit 3 via a coil 31.

In the magnetic tag unit 3, as illustrated in FIG. 3(a), the IC chip 30 is electrically connected with the coil 31 via conductors 32. The antenna 4 is electrically connected with the IC chip 30 of the magnetic tag unit 3 via the coil 31.

In the magnetic tag unit 3, adjusting the positional relation between the coil 31 and the antenna 4 creates magnetic coupling therebetween, thereby enabling communication.

FIG. 3(b) illustrates a direct electrical connection between the IC chip 30 and the antenna 4 through conductive wires 33.

In the wire-based tag unit 3, as illustrated in FIG. 3(b), the IC chip 30 is connected with the conductors 32, the conductors 32 are connected with the wires 33, and the wires 33 are directly electrically connected with the antenna 4 external to the wire-based tag unit 3. The antenna 4 is directly electrically connected with the conductors 32 and the IC chip 30 in the wire-based tag unit 3 via the wires 33.

Described next is an example configuration of the magnetic tag unit 3 with reference to FIG. 4. In the magnetic tag unit 3, the IC chip 30 is fixed on a die pad 35 formed on a substrate 34. The coil 31 is formed to surround the IC chip 30. The IC chip 30 is electrically connected with the coil 31 via the conductors 32. The IC chip 30, the die pad 35, the coil 31, and the conductors 32 are embedded in a hard resin material 36 such as epoxy.

The components of the magnetic tag unit 3 configured as described above are embedded in the hard resin material 36. This configuration can prevent breaking of wire between the IC chip 30 and the coil 31, and can reduce the size of the magnetic tag unit 3. For example, the magnetic tag unit 3 generally has a substantially rectangular parallelepiped shape, and the dimensions can be about 1.5 mm to 8 mm in length and width and about 0.5 mm to 1.5 mm in thickness.

The antenna 4 is made of metal (e.g., copper) formed on the base film 2. As illustrated in FIG. 1, for example, the antenna 4 has first linear portions 42, 42, bent portions 43, 43 formed at ends of the first linear portions 42, 42, and second linear portions 44, 44 extending from the bent portions 43, 43 and the ends of the second linear portions 44, 44 face each other. The bent portions 43 each have an arcuate shape.

Bent space portions 46, 46 are formed at both sides of space defined by the bent portions 43, 43, the first linear portions 42, 42, and the second straight line portions 44, 44.

The antenna 4 has a protruding portion 41 between the first linear portions 42, 42, which is near the center of the antenna 4. The protruding portion 41 has an arcuate shape (an example of a protruding shape) and protrudes toward the second linear portions 44, 44. It is preferred that the antenna 4 has the protruding portion 41 when the tag unit 3 is the magnetic tag unit 3. It is preferred that the protruding portion 41 of the antenna 4 is disposed as close to the magnetic tag unit 3 as possible. In addition, it is preferred that the length of the antenna 4 disposed close to the magnetic tag unit 3 is as long as possible. As a longer length of the antenna 4 is disposed close to the magnetic tag unit 3, the communication distance can be increased.

The first linear portions 42, 42 are parallel to the second linear portions 44, 44. The distal ends of the second linear portions 44, 44 are located not to contact each other.

As a second example, the bent shape of the antenna 4 may be an angular c-shape as illustrated in FIG. 5. In this case, the antenna 4 has angular bent portions 45, 45 instead of the bent portions 43, 43. The other configurations, which are the protruding portion 41, the first linear portions 42, 42, the second linear portions 44, 44, and the bent space portions 46, 46, of the second example are the same as those of the first example. One of the angular bent portions 45 has an angular c-shape, and the other one has an inverse angular c-shape. The angles of the angular c-shape and the inverse c-shape may be the right angles, or may be rounded right angles.

Described next is the communication enhancer 5. Basically, the IC tag functions by tuning the resonant frequency to a frequency band used by the reader. To tune the resonant frequency to the used frequency band, the antenna length needs to be adjusted to match the used frequency band by increasing the size of the antenna 4 or changing its shape to a more complicated one. In this regard, providing the communication enhancer 5 can reduce the resonant frequency without increasing the size of the antenna 4.

The communication enhancer 5 is formed by metal having a relatively narrow width on the base film 2. As illustrated in FIG. 1, the communication enhancer 5 is linearly disposed near the distal ends of the second linear portions 44, 44 in space extending from one bent space portion 46 to the other bent space portion 46.

When the communication enhancer 5 is disposed, the antenna 4 resonates with the communication enhancer 5 and an electric current flows in the antenna 4, thereby generating a magnetic field. This magnetic field causes an electric current to flow in the communication enhancer 5, and the current generates another magnetic field. The magnetic field generated by the electric current flowing in the communication enhancer 5 significantly changes the electromagnetic state around the antenna 4. With this configuration, the resonant frequency can be changed. The resonant frequency can be tuned to a desired used frequency band by adjusting the positional relation between the antenna 4 and the communication enhancer 5 and by adjusting the length of the communication enhancer 5.

The communication enhancer 5 of the IC tag 1 according to the first embodiment is disposed near the distal ends of the second linear portions 44, 44. In the first embodiment, the communication enhancer 5 may be disposed at any location as long as the resonant frequency can be tuned to the desired used frequency, and thus may be disposed close to the lower side of the second linear portions 44, 44, close to the upper side of the second linear portions 44, 44, or may be disposed close to both upper and lower sides of the second linear portions 44, 44.

In other words, as illustrated in FIG. 1, the first example of the IC tag 1 includes the communication enhancer 5 (first communication enhancer 5) close to the lower side of the second linear portions 44, 44 and near the distal ends of the second linear portions 44, 44 inside of space extending from one bent space portion 46 to the other bent space portion 46.

As illustrated in FIG. 6, the third example of the IC tag 1 includes the communication enhancer 5 (second communication enhancer 5) close to the upper side of the second linear portions 44 outside of the space extending from one bent space portion 46 to the other bent space portion 46. With this configuration, which is not as effective as the first example, the resonant frequency can be changed.

As illustrated in FIG. 7, the fourth example of the IC tag 1 includes the communication enhancers 5 close to the upper and the lower sides of the second linear portions 44, 44, that is, includes both the first communication enhancer 5 and the second communication enhancer 5 described above.

In the fourth example, the first communication enhancer 5 and the second communication enhancer 5 both affect the antenna 4. With this configuration, the resonant frequency can be changed.

The communication enhancer 5 can be formed by, for example, etching a copper-clad laminate on the base film 2 or printing using conductive ink. For the communication enhancer 5, a cut or punched metal sheet, a wire, or a conductive thread can be used.

The IC tag 1 according to the first embodiment is formed such that the magnetic tag unit 3 including the IC chip 30 is fixed on the cover film 6, and the cover film 6 and the magnetic tag unit 3 are covered with the coating 8.

In a preferred method of fixing the magnetic tag unit 3 to the cover film 6, an adhesive can be used. It is preferred that the adhesive has good adhesion to the magnetic tag unit 3 and the cover film 6.

Preferred examples of the material for the coating 8 include silicone rubber, fluororubber, nitrile rubber, butyl rubber, and ethylene-propylene-diene-monomer (EPDM). As described above, the cover film 6 is made of PI having good adhesion to rubber, and thus the cover film 6 adheres well to the coating 8. Although not illustrated, the coating 8 covers the magnetic tag unit 3 and its surrounding portion such that the coating 8 forms a protruding, truncated cone shape, having a circular shape in the plan view and a trapezoidal shape in the sectional view. Covering the magnetic tag unit 3 in this manner makes the tag unit 3 stiffer than other portions therearound, thereby preventing the IC tag 1 from bending across the magnetic tag unit 3.

As described above, the magnetic tag unit 3 and the cover film 6 are covered with the coating 8 made of an elastic material. The coating 8 may be formed by insert molding with the magnetic tag unit 3 fixed on the cover film 6 being an insert.

In the IC tag 1 according to the first embodiment, the resonant frequency can be changed by the function of the communication enhancer 5. Thus, the designer can provide the communication enhancer 5 in consideration with the dielectric constants of the materials of the cover film 6, the coating 8, and other components. In this regard, the designer can design the antenna by adjusting the disposition or length of the communication enhancer 5, which facilitates antenna design.

Although the tag unit 3 used in the examples described above is the magnetic tag unit 3, the tag unit 3 may be the wire-based tag unit 3. In this case, no coil 31 is included, and the antenna 4 is directly electrically connected with the IC chip 30 via conductors such as the wires 33.

Described next is the fifth example with reference to FIG. 8. The IC tag 1 according to the first embodiment illustrated in FIG. 8 includes the magnetic tag unit 3 at one of the bent space portions 46, 46 formed inside the antenna 4 such that the magnetic tag unit 3 is surrounded by the corresponding bent portion 43. The IC tag 1 according to the fifth example can change the resonant frequency by including the communication enhancer 5. Details will be described in the experimental examples described below.

Although the magnetic tag unit 3 illustrated in FIG. 8 is disposed at one of the bent space portions 46, 46 formed inside the antenna 4 and is surrounded by the bent portion 43, the position of the magnetic tag unit 3 is not limited to this. The magnetic tag unit 3 may be disposed at any location in the bent space portions 46 as long as the magnetic tag unit 3 is near the antenna 4. The resonant frequency can be changed by the function of the communication enhancer 5.

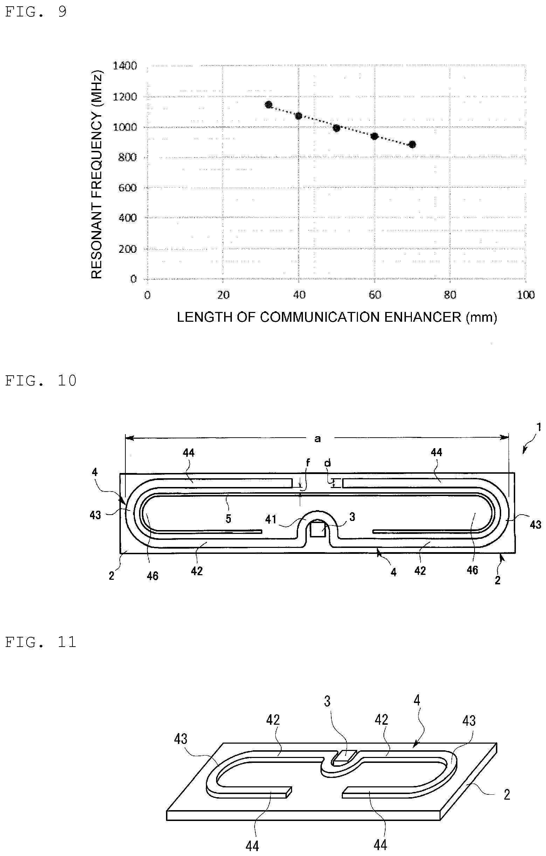

A sixth example will be described with reference to FIGS. 9 and 10. FIG. 9 is a graph illustrating how the resonant frequency changes as the length of the communication enhancer 5 changes. Although the IC tag 1 according to the first example illustrated in FIG. 1 is used, dimensions a and b of the antenna 4 are changed to 40 mm and 8 mm, respectively. As is apparent from FIG. 9, the resonant frequency is reduced as the length of the communication enhancer 5 increases.

In the sixth example of the IC tag 1 according to the first embodiment, as illustrated in FIG. 10, the bent space portions 46, 46 are formed inside the bent portions 43, 43 of the antenna 4, and a linear communication enhancer 5 is disposed inside of space extending from one bent space portion 46 to the other bent space portion 46, and bent communication enhancers 5 that are bent along the bent portions 43, 43 in the bent space portions 46 inside the antenna 4 are contiguously connected to the both ends of the linear communication enhancer 5.

When the bent communication enhancers 5 are disposed, the antenna 4 resonates with the bent communication enhancers 5 and an electric current flows in the antenna 4, thereby generating a magnetic field. This magnetic field causes an electric current to flow in the bent communication enhancers 5, and the current generates another magnetic field. The magnetic field generated by the electric current flowing in the bent communication enhancers 5 significantly changes the electromagnetic state around the antenna 4. With this configuration, the resonant frequency can be changed. Details will be described in the experimental examples described below.

Although the tag unit 3 used in the sixth example described above is the magnetic tag unit 3, the tag unit 3 may be the wire-based tag unit 3. In this case, no coil 31 is included, and the antenna 4 is directly electrically connected with the IC chip 30 via conductors such as the wires 33.

Although, in the examples above, the protruding portion 41 has an arcuate shape, the protruding portion may have any shape protruding toward the second linear portions. For example, the protruding portion 41 may have a rectangular shape.

### Experimental Examples

(1) An experimental example of the first example will be described below.

The resonant frequency of the IC tag 1 according to the first example was measured.

The antenna 4 and the communication enhancer 5 were provided on the base film 2 having a thickness of 0.1 mm. The dimensions of the parts of the antenna 4 illustrated in FIG. 1 were as follows: a = 68 mm; b = 12 mm; and d = 1.5 mm. The dimensions of the communication enhancer 5 were as follows: c = 50 mm and e = 0.5 mm. The distance f between the antenna 4 and the communication enhancer 5 was changed from 1 to 3 mm. The resonant frequency was measured close to the antenna in the range of 800 to 1200 MHz by a magnetic probe attached to a network analyzer for each distance f. The results are illustrated in Table 1.

In Table 1, N/A in the column of the distance f indicates a configuration without the communication enhancer 5 in the first example.

**Table 1**

| DISTANCE **f** | RESONANT FREQUENCY (MHz) |
|---|---|
| **1mm** | **934** |
| **2mm** | **970** |
| **3mm** | **1020** |
| N/A | **1088** |

As is apparent from Table 1, the resonant frequency is reduced with the distance f. The resonant frequency without the communication enhancer 5 was 1088 MHz, whereas the resonant frequency was reduced to 934 MHz when the distance f was 1 mm. When, for example, the used frequency band is 920 MHz, the resonant frequency can be tuned to the used frequency band by providing the communication enhancer 5 in the distance f of 1 mm. In other words, the resonant frequency can be tuned to a desired used frequency band by adjusting the distance between the communication enhancer 5 and the second linear portions 44, 44.

The resonant frequency of the IC tag 1 according to the first example was measured.

The antenna 4 and the communication enhancer 5 were provided on the base film 2 having a thickness of 0.1 mm. The dimensions of the parts of the antenna 4 illustrated in FIG. 1 were as follows: a = 68 mm; b = 12 mm; and d = 1.5 mm. The width e of the communication enhancer 5 was e = 0.5 mm. The distance f between the antenna 4 and the communication enhancer 5 was f = 1 mm. The length c of the communication enhancer 5 was changed. The resonant frequency was measured close to the antenna in the range of 800 to 1200 MHz by a magnetic probe attached to a network analyzer for each length c. The results are illustrated in Table 2.

**Table 2**

| LENGTH **C** (mm) | RESONANT FREQUENCY (MHz) |
|---|---|
| **0** | **1088** |
| **10** | **1084** |
| **15** | **1045** |
| **20** | **1033** |
| **25** | **1016** |
| **30** | **1004** |
| **35** | **982** |
| **40** | **971** |
| **45** | **951** |
| **50** | **934** |
| **54** | **921** |
| **60** | **897** |

As is apparent from Table 2, the resonant frequency is reduced as the length of the communication enhancer 5 increases. The resonant frequency without the communication enhancer 5 was 1088 MHz, whereas the resonant frequency was reduced to 921 MHz when the length c was 54 mm.

Accordingly, providing a communication enhancer 5 having a length of 54 mm can improve communication when the used frequency band is 920 MHz, for example. When the used frequency band is 900 MHz, providing a communication enhancer 5 having a length of 60 mm can improve communication. In other words, the resonant frequency can be tuned to a desired used frequency band by adjusting the length of the communication enhancer 5.
(2) An experimental example of the fourth example will be described below.

In the fourth example illustrated in FIG. 7, the antenna 4 and the communication enhancer 5 having the same size as those of the first example were used. The distance f between the antenna 4 and the communication enhancer 5 disposed inside of the antenna 4 was fixed to 1 mm. A distance g between the antenna 4 and another communication enhancer 5 disposed outside of the antenna 4 was changed. The resonant frequency was measured close to the antenna in the range of 800 to 1200 MHz by a magnetic probe attached to a network analyzer in each distance g. The results are illustrated in Table 3.

**Table 3**

| DISTANCE **f** | DISTANCE **g** | RESONANT FREQUENCY (MHz) |
|---|---|---|
| **1 mm** | **1 mm** | **838** |
| | **2 mm** | **884** |
| | **3 mm** | **903** |

As is apparent from Table 3, when two communication enhancers 5 were disposed inside and outside of the second linear portions 44 of the antenna 4, the resonant frequency was reduced as the outside communication enhancer 5 was disposed in a shorter distance from the antenna 4. In other words, the two communication enhancers 5 both affected the antenna 4. The resonant frequency was 838 MHz when f = 1 mm and g = 1 mm, whereas the resonant frequency was 903 MHz when f = 1 mm and g = 3 mm.

When, for example, the used frequency band is 920 MHz, the resonant frequency can be tuned closer to 920 MHz by disposing the communication enhancer 5 in the distance g of 3 mm. In other words, the resonant frequency can be tuned to a desired used frequency band by adjusting the disposition of the communication enhancer 5.
(3) An experimental example of the fifth example will be described below.

In the fifth example illustrated in FIG. 8, the antenna 4 and the communication enhancer 5 having the same size as those of the first example were used. The magnetic tag unit 3 was disposed in one of the bent space portions 46 inside the antenna 4 such that the magnetic tag unit 3 was surrounded by the bent portion 43. In the same manner as in the first example, the communication enhancer 5 was disposed in the distance f of 1 mm and fixed. The result was compared with a case in which no communication enhancer 5 was disposed. The resonant frequency was measured close to the antenna in the range of 800 to 1200 MHz by a magnetic probe attached to a network analyzer. The results are illustrated in Table 4.

**Table 4**

| COMMUNICATION ENHANCER | RESONANT FREQUENCY (MHz) |
|---|---|
| DISPOSED | **903** |
| NOT DISPOSED | **1060** |

As is apparent from Table 4, when the magnetic tag unit 3 is disposed in one of the bent space portions 46 with being surrounded by the bent portion 43, the resonant frequency is reduced by the function of the communication enhancer 5.

In other words, the communication enhancer 5 affects the antenna 4 even when the magnetic tag unit 3 is disposed in a different position.

In the fifth example, the resonant frequency can be tuned to a desired used frequency band by adjusting the disposition of the communication enhancer 5.
(4) An experimental example of the sixth example will be described below.

### (Test 1)

In the sixth example illustrated in FIG. 10, the magnetic tag unit 3 is disposed in the protruding portion 41 of the antenna 4. The antenna 4 and the communication enhancer 5 were provided on the base film 2 having a thickness of 0.1 mm. The dimensions of the parts of the antenna 4 illustrated in FIG. 10 were as follows: a = 40 mm; b = 8 mm; and d = 1 mm. The width e of the communication enhancer 5 was e = 0.5 mm, and the total length thereof was 70 mm. The distance f between the communication enhancer 5 and the second linear portions 44, 44 was fixed to 0.3 mm. The resonant frequency was measured close to the antenna in the range of 800 to 1200 MHz by a magnetic probe attached to a network analyzer. The results are illustrated in Table 5.

In Test 1 and Tests 2 to 4 described below, the communication enhancer 5 was composed of a linear portion and curved portions in conformance with the shape of the antenna 4. In Test 5 below, the communication enhancer 5 was composed of a linear portion.

### (Test 2)

Test 2 was performed under the same conditions as Test 1 except that the total length of the communication enhancer 5 was 60 mm. The resonant frequency was measured close to the antenna by a magnetic probe attached to a network analyzer. The result is illustrated in Table 5.

### (Test 3)

Test 3 was performed under the same conditions as Test 1 except that the total length of the communication enhancer 5 was 50 mm. The resonant frequency was measured close to the antenna by a magnetic probe attached to a network analyzer. The result is illustrated in Table 5.

### (Test 4)

Test 4 was performed under the same conditions as Test 1 except that the total length of the communication enhancer 5 was 40 mm. The resonant frequency was measured close to the antenna by a magnetic probe attached to a network analyzer. The result is illustrated in Table 5.

### (Test 5)

Test 5 was performed under the same conditions as Test 1 except that the total length of the communication enhancer 5 was 32 mm. The resonant frequency was measured close to the antenna by a magnetic probe attached to a network analyzer. The result is illustrated in Table 5.

### (Test 6)

Test 6 was performed under the same conditions as Test 1 except that no communication enhancer was provided. The resonant frequency was measured close to the antenna by a magnetic probe attached to a network analyzer. The result is illustrated in Table 5.

**Table 5**

| | TEST 1 | TEST 2 | TEST 3 | TEST 4 | TEST 5 | TEST 6 |
|---|---|---|---|---|---|---|
| TOTAL LENGTH OF COMMUNICATION ENHANCER (mm) | **70** | **60** | **50** | **40** | **32** | **0** |
| RESONANT FREQUENCY (MHz) | **883** | **938** | **993** | **1070** | **1149** | - |

As is apparent from Table 5, the resonant frequency is reduced as the total length of the communication enhancer 5 increases. Thus, the resonant frequency can be tuned to a desired used frequency band by changing the total length of the bent communication enhancers 5. In Test 6, the resonant frequency exceeded 1200 MHz, and thus detection of the resonant frequency was unsuccessful.

### (Second Embodiment)

Although, in the examples according to the first embodiment above, the communication enhancer 5 is integrally formed in the IC tag 1, the configuration of the IC tag 1 is not limited to this. The IC tag 1 may be configured as described in the following examples according to a second embodiment. Details will be described with reference to the accompanying drawings.

In the examples according to the second embodiment, the IC tag 1 is configured by an IC tag main body 11 and a communication enhancing member 12 that is separate from the IC tag main body 11 and includes the communication enhancer 5. The method of manufacturing such an IC tag 1 will be described.

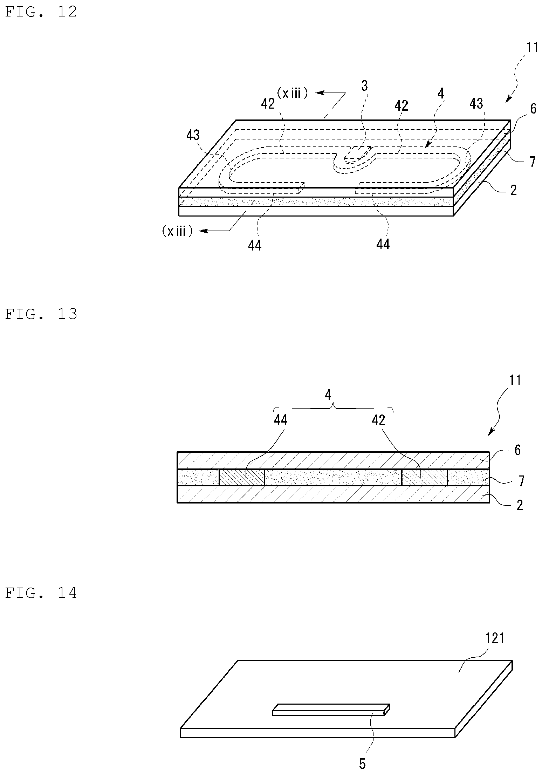

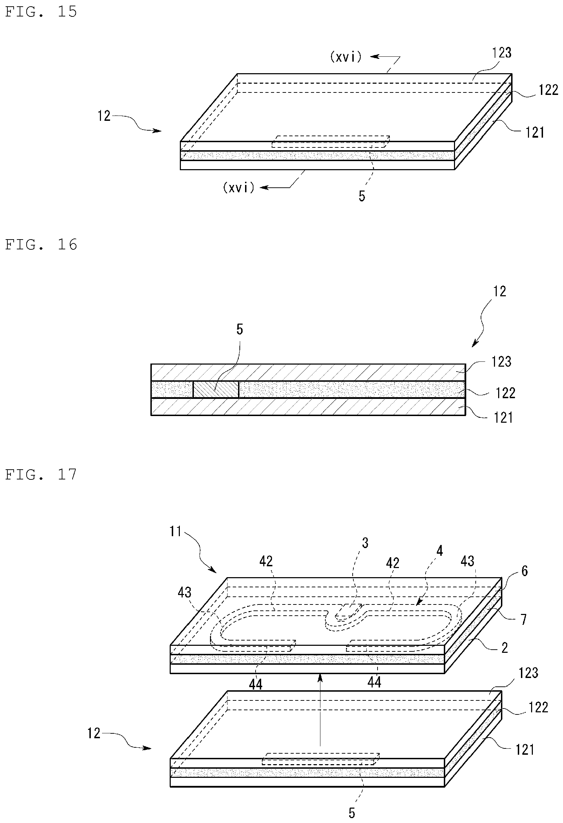

First, the IC tag main body 11 will be described with reference to FIGS. 11 to 13, and then the communication enhancing member 12 will be described with reference to FIGS. 14 to 16. The IC tag 1 configured by the IC tag main body 11 and the communication enhancing member 12 will be described with reference to FIGS. 17 to 19. With regard to the same letters and numerals as those in the first embodiment, the description in the first embodiment is incorporated herein by reference.

### [Step of Fabricating IC Tag Main Body and IC Tag Main Body]

In the step of fabricating the IC tag main body, first, as illustrated in FIG. 11, the magnetic tag unit (hereinafter simply referred to as tag unit) 3 including the IC chip (not illustrated in FIG. 1) and the antenna 4 are disposed on the base film 2.

As illustrated in FIGS. 12 and 13, the cover film 6 is laminated on the surface of the base film 2 on which the tag unit 3 and the antenna 4 are disposed via the adhesive layer 7 to cover the tag unit 3 and the antenna 4. The IC tag main body 11 is formed in this manner.

In the example of FIG. 11, the tag unit 3 is disposed on the base film 2. If the tag unit 3 is the magnetic tag unit, first, the cover film 6 is laminated on the base film 2 and then the tag unit 3 is stacked on the cover film 6. In this case, it is preferred that the tag unit 3 is covered with the coating 8 for protection.

### [Step of Fabricating Communication Enhancing Member and Communication Enhancing Member]

In the step of fabricating the communication enhancing member, first, as illustrated in FIG. 14, the communication enhancer 5 is disposed on a base film 121.

Then, as illustrated in FIGS. 15 and 16, a cover film 123 is laminated on the surface of the base film 121 on which the communication enhancer 5 is disposed via an adhesive layer 122 to cover the communication enhancer 5. The communication enhancing member 12 is formed in this manner.

As the base film 121, the same kind of the base film 2 used in the IC tag main body 11 can be used. As the adhesive layer 122, the same kind of the adhesive layer 7 used in the IC tag main body 11 can be used. As the cover film 123, the same kind of the cover film 6 used in the IC tag main body 11 can be used.

### [Method of Manufacturing IC Tag and IC Tag]

First, to manufacture the IC tag, as illustrated in FIG. 17, the IC tag main body 11 and the communication enhancing member 12 described above are prepared.

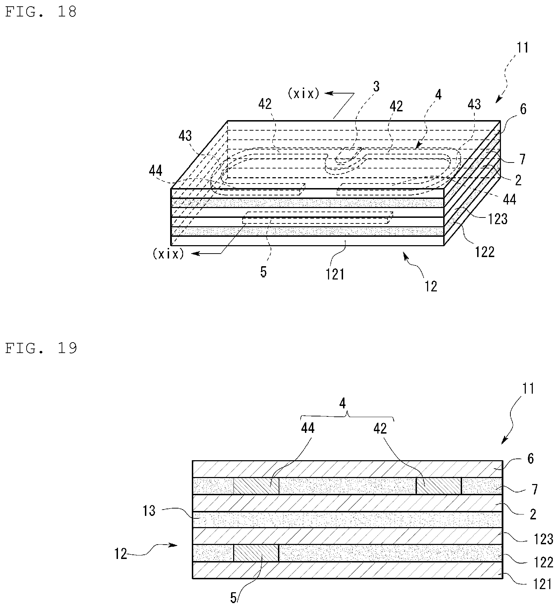

Then, as illustrated in FIGS. 18 and 19, the communication enhancing member 12 is attached to the IC tag main body 11. The IC tag 1 is formed in this manner.

In the present example, the top surface (surface of the cover film 123) of the communication enhancing member 12 is attached to the bottom surface (surface of the base film 2) of the IC tag main body 11 via an insulating layer 13. In this case, it is preferred that an insulating film is used for the insulating layer 13. Examples of the method of attaching the communication enhancing member 12 include, but not limited to, a method of using an adhesive sheet or adhesive, or thermal fusion. The communication enhancing member 12 may be detachably attached to the IC tag main body 11 as described below.

The communication enhancing member 12 according to the second embodiment can be formed separately from the IC tag main body 11, and the communication enhancing member 12 including the communication enhancer 5 can be attached to the IC tag main body 11 after the IC tag main body 11 is fabricated. With this configuration, the designer can optimally tune the resonant frequency.

With this configuration, the size of the folded dipole antenna can be reduced and antenna design can be facilitated. In addition, the communication enhancing member 12 corresponding to the used frequency band can be attached to the IC tag main body 11, which can optimally tune the resonant frequency.

For example, several types of communication enhancing members 12 each including a communication enhancer 5 having a different length are manufactured beforehand. The designer can select a communication enhancing member 12 that can tune the resonant frequency to a frequency of a tag reader to be used, and attach the selected communication enhancing member 12 to the IC tag main body 11 for use. With this configuration, the resonant frequency can be tuned by attaching a communication enhancing member 12 that matches the application or the tag reader. Moreover, when the IC tag is used for a different application and the communication enhancing member 12 is detachably attached, the communication enhancing member 12 can be detached from the IC tag main body 11, and a different communication enhancing member 12 that can tune the resonant frequency to a desired frequency can be newly selected and attached. With this configuration, the IC tag main body 11 or the communication enhancing member 12 that has been used for a certain application can be used again for another application, thereby reducing costs.

In the step of fabricating the communication enhancing member 12, it is preferred that the length of the communication enhancer 5 is adjusted in consideration of the dielectric constants of the materials of the cover film 123 and the adhesive layer 122. The resonant frequency can be tuned only by adjusting the disposition or the length of the communication enhancer 5, thereby facilitating antenna design.

The distance between the communication enhancer 5 of the communication enhancing member 12 and the second linear portions 44, 44 of the antenna 4 in the IC tag main body 11 corresponds to the sum of the thicknesses of the base film 2 of the IC tag main body 11, the insulating layer 13, and the cover film 123 of the communication enhancing member 12. If thinner insulating layer 13, base film 2, and cover film 123 are used, the communication enhancer 5 can be relatively close to the second linear portions 44, 44 of the antenna 4, and the size of the IC tag can be reduced.

In other words, the designer can change the thickness in accordance with the desired resonant frequency to design the IC tag in a desired size. In particular, this configuration allows more flexible antenna design for the IC tag used in the UHF band.

When the communication enhancer 5 included in the communication enhancing member 12 is disposed, the antenna 4 resonates with the communication enhancer 5 and an electric current flows in the antenna, thereby generating a magnetic field around the antenna. This magnetic field causes an electric current to flow in the communication enhancer 5, and the current generates another magnetic field around the communication enhancer 5. The magnetic field generated by the electric current flowing in the communication enhancer 5 significantly changes the electromagnetic state around the antenna 4. With this configuration, the resonant frequency can be changed. The resonant frequency can be tuned to a desired used frequency band by adjusting the positional relation between the antenna 4 and the communication enhancer 5 and the length of the communication enhancer 5.

In the description above, the communication enhancing member 12 includes the base film 121 and the cover film 123, but is not limited to this. The communication enhancing member 12 may have any configuration as long as it includes the communication enhancer 5. The communication enhancing member 12 is attached at least to the top surface or the bottom surface of the IC tag main body 11 via the insulating layer 13. In this case, the IC tag main body 11 is bonded on a surface of the insulating layer 13 and the communication enhancing member 12 is bonded on the other surface of the insulating layer 13.

As the insulating layer 13, an insulating film or an adhesive film can be used.

If an adhesive is used instead of the insulating film, the base film 2 or the cover film 6 of the IC tag main body 11 and the base film 121 or the cover film 123 of the communication enhancing member 12 may function as the insulating layer.

In the description above, the cover film 123 of the communication enhancing member 12 is attached to the IC tag main body 11 via the insulating layer 13, but the base film 121 of the communication enhancing member 12 may be attached to the IC tag main body 11 via the insulating layer 13.

### [Positional Relation between Antenna and Communication Enhancer]

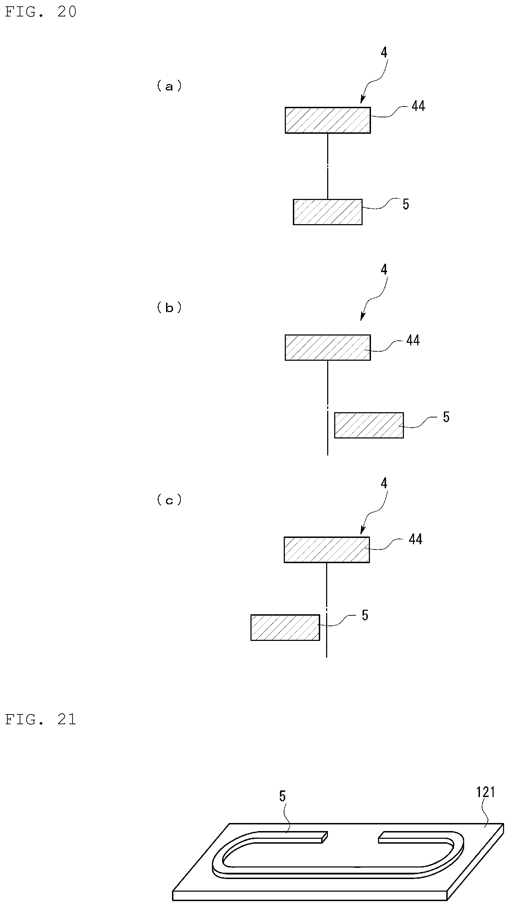

Described next is the positional relation between the antenna 4 and the communication enhancer 5 in the IC tag 1 with reference to FIG. 20. FIG. 20 only illustrates the antenna 4 and the communication enhancer 5 taken along the same section as FIG. 19.

In the IC tag 1 described in the examples above, as illustrated in FIG. 20(a), the communication enhancer 5 is disposed at a position immediately below the distal ends of the second linear portions 44 of the antenna 4. Disposing the communication enhancer 5 at a position immediately below the distal ends of the second linear portions 44 is such that the communication enhancer 5 is disposed close to the bottom surface of the antenna 4 and the center of the distal ends of the second linear portions 44 of the antenna 4 and the center of the communication enhancer 5 in each strip width direction are aligned in the stacking direction (up-down direction in FIG. 20) of the IC tag main body 11 and the communication enhancing member 12.

In other examples, as illustrated in FIGS. 20(b) and 20(c), the communication enhancer 5 may be disposed near the position immediately below the antenna 4. In FIG. 20(b), for example, the communication enhancer 5 is disposed at a position slightly close to the tag unit 3 (not illustrated in FIG. 20) relative to the position immediately below the second linear portions 44 of the antenna 4. In FIG. 20(c), for example, the communication enhancer 5 is disposed at a position slightly away from the tag unit 3 (not illustrated in FIG. 20) relative to the position immediately below the second linear portions 44 of the antenna 4. Disposing the communication enhancer 5 near the position immediately below the antenna 4 may be within a range in which the communication enhancer 5 can substantially change the resonant frequency of the antenna 4.

Although not illustrated in FIG. 20, the communication enhancer 5 may be disposed at or near a position immediately above the distal ends of the second linear portions 44, 44 of the antenna 4. Disposing the communication enhancer 5 at a position immediately above the distal ends of the second linear portions 44 is such that the communication enhancer 5 is disposed close to the top surface of the antenna 4 and the center of the distal ends of the second linear portions 44 of the antenna 4 and the center of the communication enhancer 5 in each strip width direction are aligned in the stacking direction (up-down direction in FIG. 20) of the IC tag main body 11 and the communication enhancing member 12.

FIG. 21 is a perspective view illustrating another example of the step of fabricating the communication enhancing member according to the second embodiment. As illustrated in FIG. 21, bent communication enhancers 5 that are bent along the bent portions 43, 43 of the antenna 4 are contiguously connected to the both ends of the communication enhancer 5 disposed in the communication enhancing member 12 illustrated in FIG. 14, and the bent communication enhancers 5 are provided in conformance with the shape of the antenna 4. With this configuration, the resonant frequency can be tuned to a desired frequency band by adjusting the length of the bent communication enhancers 5.

In the description above, the communication enhancing member 12 according to the second embodiment includes one communication enhancer 5, but the number of communication enhancers 5 is not limited to this. For example, as illustrated in FIG. 7 in the first embodiment, two communication enhancers 5 may be included. In this case, two communication enhancing members 12 are prepared, and one is attached to the bottom surface of the IC tag main body 11 and the other one is attached to the top surface of the IC tag main body 11.

For another example, a plurality of communication enhancing members 12 each including one communication enhancer 5 are prepared, and the communication enhancing members 12 may be stacked on or near the top surface or the bottom surface of the IC tag main body 11. For still another example, a plurality of communication enhancers 5 may be included in one communication enhancing member 12. In other words, the communication enhancers 5 may be provided in any manner as long as the resonant frequency can be tuned to a desired frequency.

The IC tag according to the examples above are formed by attaching the communication enhancing member 12 including the communication enhancer 5 to the IC tag main body 11, the communication enhancing member 12 being formed separately from the IC tag main body 11. Such an IC tag can reduce the distance between the antenna and the communication enhancer compared with the IC tag including the communication enhancer 5 as an integral structure, thereby further reducing the resonant frequency. It has been observed that the IC tag according to the examples of the second embodiment can tune the resonant frequency to a desired frequency band in the same manner as in the experimental examples of the first embodiment.

### EXPLANATIONS OF LETTERS OR NUMERALS

1: IC tag
2: Base film
20: Protection film
3: Tag unit (magnetic tag unit, wire-based tag unit)
30: IC chip
31: Coil
32: Conductor
33: Wire
34: Substrate
35: Die pad
36: Resin material
4: Antenna
41: Protruding portion
42: First linear portion
43: Bent portion
44: Second linear portion
45: Angular bent portion
46: Bent space portion
5: Communication enhancer
6: Cover film
7: Adhesive layer
8: Coating
11: IC tag main body
12: Communication enhancing member
121: Base film
122: Adhesive layer
123: Cover film
13: Insulating layer

## Claims

1. An IC tag comprising:
an IC chip; and
an antenna electrically connected with the IC chip,
wherein
the antenna includes a first linear portion, bent portions formed at both ends of the first linear portion, and second linear portions extending from the bent portions on both ends of the first linear portion, distal ends of the second linear portions facing each other, and bent space portions are formed at both sides of space defined by the bent portions on both ends of the first linear portion, the first linear portion, and the second linear portions, and
a communication enhancer that tunes a resonant frequency to a desired frequency is provided near the distal ends of the second linear portions and provided at least inside or outside of space extending from one bent space portion to the other bent space portion.

2. The IC tag according to claim 1, wherein one of the bent portions has an arcuate shape or an angular c-shape, and the other one of the bent portions has an arcuate shape or an inverse angular c-shape.

3. The IC tag according to claim 1 or 2, wherein the communication enhancer is linearly provided near the distal ends of the second linear portions and provided inside of the space extending from one bent space portion to the other bent space portion.

4. The IC tag according to claim 1 or 2, wherein the communication enhancer is provided near the distal ends of the second linear portions and provided outside of the space extending from one bent space portion to the other bent space portion.

5. The IC tag according to claim 1 or 2, wherein the communication enhancer is provided near the distal ends of the second linear portions and provided both inside and outside of the space extending from one bent space portion to the other bent space portion.

6. The IC tag according to claim 1 or 2, wherein a linear communication enhancer is disposed near the distal ends of the second linear portions and disposed inside of the space extending from one bent space portion to the other bent space portion, and bent communication enhancers that are bent along the bent portions in the bent space portions are contiguously connected to both ends of the linear communication enhancer.

7. The IC tag according to any one of claims 1 to 6, further comprising:
a magnetic tag unit including the IC chip and a coil electrically connected with the IC chip, wherein
the antenna is electrically connected with the IC chip via the coil included in the magnetic tag unit.

8. The IC tag according to claim 7, wherein
the antenna has a protruding portion near a center of the first linear portion, the protruding portion having a shape protruding toward the second linear portions, and
the magnetic tag unit is disposed such that the magnetic tag unit is surrounded by the protruding portion.

9. The IC tag according to claim 7, wherein the magnetic tag unit is disposed in one of the bent space portions inside the antenna such that the magnetic tag unit is surrounded by one of the bent portions.

10. An IC tag comprising:
an IC tag main body including an IC chip and an antenna electrically connected with the IC chip, the antenna having a first linear portion, bent portions formed at both ends of the first linear portion, and second linear portions extending from the bent portions on both ends of the first linear portion, distal ends of the second linear portions facing each other; and
a communication enhancing member including a communication enhancer that tunes a resonant frequency to a desired frequency, wherein
the communication enhancing member is disposed at least on a top surface or a bottom surface of the IC tag main body via an insulating layer such that the communication enhancer is located at least at or near a position immediately above or immediately below the second linear portions.

11. The IC tag according to claim 10, wherein the insulating layer is an insulating film.

12. The IC tag according to claim 10 or 11, wherein one of the bent portions has an arcuate shape or an angular c-shape, and the other one of the bent portions has an arcuate shape or an inverse angular c-shape.

13. The IC tag according to claim 10, 11, or 12, wherein
a linear communication enhancer is disposed near the distal ends of the second linear portions and disposed inside of space extending from one bent space portion to another bent space portion, and bent communication enhancers that are bent along the bent portions in the bent space portions are contiguously connected to both ends of the linear communication enhancer, and
the communication enhancing member includes the bent communication enhancers contiguously connected to the linear communication enhancer.

14. The IC tag according to any one of claims 10 to 13, further comprising:
a magnetic tag unit including the IC chip and a coil electrically connected with the IC chip, wherein
the antenna is electrically connected with the IC chip via the coil included in the magnetic tag unit.

15. The IC tag according to claim 14, wherein
the antenna has a protruding portion near a center of the first linear portion, the protruding portion having a shape protruding toward the second linear portions, and
the magnetic tag unit is disposed such that the magnetic tag unit is surrounded by the protruding portion.

16. The IC tag according to claim 15, wherein the magnetic tag unit is disposed in one of the bent space portions inside the antenna such that the magnetic tag unit is surrounded by one of the bent portions.

17. A method of manufacturing an IC tag including an IC chip and an antenna electrically connected with the IC chip, the antenna having a first linear portion, bent portions formed at both ends of the first linear portion, and second linear portions extending from the bent portions on both ends of the first linear portion, distal ends of the second linear portions facing each other, the method comprising:
a step of fabricating an IC tag main body in which the IC chip and the antenna are disposed on a base film;
a step of fabricating a communication enhancing member in which a communication enhancer that tunes a resonant frequency to a desired frequency is included; and
a step of attaching the communication enhancing member in which the communication enhancing member is attached at least to a top surface or a bottom surface of the IC tag main body via an insulating layer such that the communication enhancing member is located at least at or near a position immediately above or immediately below the second linear portions.

18. The method of manufacturing the IC tag according to claim 17, wherein the insulating layer is an insulating film.
